(19) Europäisches Patentamt
European Patent Office
Office européen des brevets

(11) **EP 0 928 563 B1**

(12) **FASCICULE DE BREVET EUROPEEN**

(45) Date de publication et mention
de la délivrance du brevet:
**02.05.2003 Bulletin 2003/18**

(51) Int Cl.⁷: **A23L 1/10**, A23L 1/164

(21) Numéro de dépôt: **99400043.8**

(22) Date de dépôt: **08.01.1999**

(54) **Procédé de préparation d'une farine Masa, farine Masa et ses applications**

Verfahren zur Herstellung von Masa-Mehl, Masa-Mehl und Verwendungen

Process for making masa flour, masa flour and uses

(84) Etats contractants désignés:
**AT BE CH CY DE DK ES FI FR GB GR IE IT LI LU MC NL PT SE**

(30) Priorité: **08.01.1998 FR 9800140**

(43) Date de publication de la demande:
**14.07.1999 Bulletin 1999/28**

(73) Titulaire: **Ulice**
**63204 Riom Cedex (FR)**

(72) Inventeurs:
• **Despre, Denis**
  **63200 Riom (FR)**
• **Messager, Arnaud**
  **63200 Riom (FR)**

(74) Mandataire: **Breese, Pierre**
**Breese - Majerowicz - Simonnot**
**3, avenue de l'Opéra**
**75001 Paris (FR)**

(56) Documents cités:
**EP-A- 0 883 999**     **WO-A-97/29647**
**FR-A- 700 337**       **FR-A- 805 723**
**FR-A- 2 110 065**     **US-A- 3 655 385**
**US-A- 5 395 637**     **US-A- 5 558 886**
**US-A- 5 652 010**

• **M.H.GOMEZ ET AL: "Starch Characterization of Nixtamalized Corn Flour" CEREAL CHEMISTRY., vol. 68, no. 6, 1991, pages 578-582, XP002078696 MINNEAPOLIS US**

**Description**

La présente invention se rapporte au domaine agro-alimentaire et concerne la préparation de produits au goût mexicain dits produits "Tex Mex" comme des tortillas, des tortillas chips, des corn chips, des taco Shells et tous les produits qui en sont dérivés, bien connus des consommateurs même Européens. On peut classer les produits finis Tex Mex en 2 grandes classes :

- Les tortillas chips. Ce sont des produits rigides et friables, dont les critères de qualité sont la couleur, la forme, la répartition des bulles à la surface dit en anglais "blistering" et la texture.
- Les table tortillas. Ce sont des produits souples, dont les critères de qualité sont la couleur, la forme, la souplesse de la tortillas pour la rouler dit en anglais rollability.

Ces produits sont préparés le plus souvent à partir d'une farine de maïs, dite farine Masa, obtenue par un procédé traditionnel ou par un traitement thermique avec de la chaux éteinte qui permet de conférer des propriétés de cohésion et d'apporter le goût caractéristique Tex Mex. Cette farine Masa, avec ses propriétés de cohésion inexistante chez une farine n'ayant pas subi un tel traitement, permet la fabrication d'une pâte qui est ensuite laminée pour conduire à la forme du produit fini.

Les procédés traditionnels de l'art antérieur sont d'origines mexicaine ou américaine et sont caractérisés par l'utilisation de grains entiers de maïs. Ces grains sont cuits dans de l'eau et de la chaux à une température proche de 100°C puis mis à tremper pendant 24 heures. L'ensemble de ces 2 étapes est appelé "nixtamalisation".

Après trempage, les grains sont lavés pour éliminer le péricarpe (enveloppe externe du grain) puis broyés, la pâte obtenue est appelée Masa signifiant pâte en Espagnol.

Cette pâte est soit utilisée directement pour la réalisation des tortillas chips ou table tortillas, soit séchée pour donner la farine Masa.

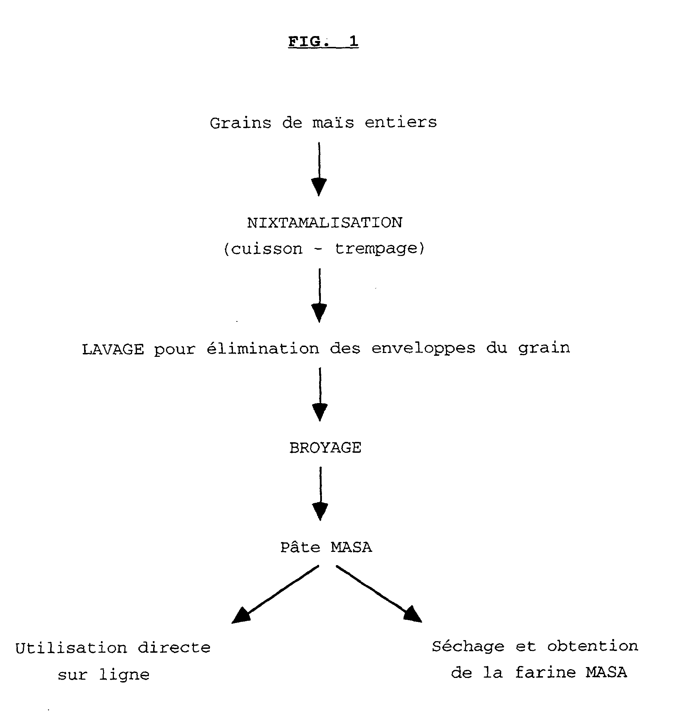

La figure 1 en annexe est une représentation schématique du procédé de fabrication traditionnelle de pâte et de farine masa.

Les paramètres clés de ce procédé traditionnel sont :

- Le choix d'une variété adaptée. En effet, ces procédés sont mis en oeuvre avec des variétés américaines de maïs DENTE présentant des caractéristiques spécifiquement adaptées aux procédés américain et mexicain.
- Les paramètres de cuisson pour gélatiniser l'amidon qui apporte la cohésion et détacher les enveloppes du maïs.
- Le lavage pour éliminer au maximum les enveloppes du maïs et éviter des colorations parasites
- Le broyage qui détermine le produit fini : blistering, texture, etc....
- Le séchage pour conserver le niveau de gélatinisation idéal.

Les procédés traditionnels de l'art antérieur nécessitent la mise en oeuvre d'équipements très lourds, notamment pour le stockage des grains, des cuves de cuisson et de trempage, des équipements de broyage et de séchage, occupant une surface au sol très importante, des stations périphériques de traitement des effluents, en effet, l'élimination des enveloppes du grain nécessite énormément d'eau et une station de traitement en aval de l'usine de production est nécessaire. Ces procédés nécessitent en outre une quantité de main d'oeuvre élevée et d'importantes étapes de nettoyage.

Outre les inconvénients ci-dessus, les procédés de l'art antérieur ne sont pas adaptés aux variétés de maïs Corné Denté qui sont cultivées en Europe. En effet, d'une part le péricarpe de ces variétés cornés dentés est plus difficile à éliminer et nécessite donc des températures et des temps de cuisson supérieurs, préjudiciable à la machinabilité de la pâte. Et d'autre part, les variétés cornés dentés ont tendance à gélatiniser plus vite. Ainsi, une légère surcuisson, au cours du procédé traditionnel, conduit à une farine Masa qui est trop collante ne peut plus passer dans les cylindres du laminoir découpeur, dénommé en anglais "sheeter".

La présente invention vise à pallier les inconvénients rapportés ci-dessus et plus particulièrement à offrir un procédé de préparation de farine Masa adapté à toutes les variétés de maïs, notamment celles dont les caractéristiques sont différentes des variétés américaines de maïs Denté qui ne sont pas cultivées en Europe.

Un autre but de la présente invention, concomitant de celui ci-dessus, est d'offrir un procédé alternatif au procédé traditionnel de nixtamalisation, sans effluent, utilisant des farines, péricarpe déjà enlevé, issues des variétés Corné Denté originaires notamment de Limagne, tout en garantissant une qualité de farine Masa identique aux farines Masa américaines importées en Europe.

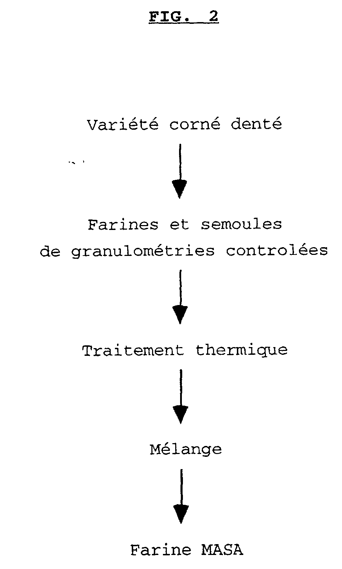

Le procédé de l'invention se caractérise d'une part par le choix de farines résultant d'une mouture et d'autre part, par un traitement thermique puis un mélange avantageusement adapté aux variétés de maïs Corné Denté. Une représentation schématique du procédé selon l'invention est donnée à la figure 2 en annexe.

Le procédé de préparation d'une farine Masa selon l'invention comprend plus particulièrement les étapes suivantes :

(a) On prépare par tout moyen approprié au moins une farine et au moins une semoule, l'une et l'autre issue d'une ou plusieurs variété de maïs dont le péricarpe a été enlevé.

(b) On soumet, séparément ou en mélange, la ou les farines et la ou les semoules préparées à l'étape (a), à l'une et l'autre ou au mélange desquelles est ajoutée une substance alcaline, à un traitement thermique permettant la gélatinisation de l'amidon.

c) On mélange la ou les farines et la ou les semoules si celles-ci n'ont pas été mélangées lors du traitement thermique de l'étape (b), et éventuellement on ajoute un ou plusieurs additifs permettant de modifier et d'apporter de nouvelles fonctionnalités à la farine Masa obtenue.

La première étape (a) du procédé de l'invention consiste à préparer, par tout moyen approprié connu de l'homme du métier comme les techniques de première transformation utilisées principalement dans l'industrie semoulière :

-    au moins une farine, et
-    au moins une semoule,

l'une et l'autre issue d'une ou plusieurs variété de maïs dont le péricarpe a été enlevé.

Un des critères de qualité de la farine Masa est sa granulométrie. Ce paramètre permet de réguler le blistering de la chips (bulles à la surface). Au moment où les chips sont plongées dans la friture, l'eau présente dans la chips se transforme en vapeur et cherche à sortir. Si la pâte utilisée n'est composée que de fines particules, une structure homogène et étanche est obtenue au moment du passage dans le four se traduisant lors du "deep frying" par la formation de chips soufflées. Pour permettre le passage de la vapeur, des grosses particules sont intégrées dans le mélange pour créer des points de ruptures facilitant l'évacuation de la vapeur. Mais une trop forte quantité de grosses particules donne des chips dures (absence de blistering).

Le procédé de l'invention est donc fondé sur le choix de fractions, farines et semoules, de maïs de granulométries définies. On préfère dans le procédé de l'invention :

-    des farines dont la granulométrie moyenne, dénommée D50, est comprise entre 75 et 200 μm, calculée par détermination laser de la granulométrie selon le principe de diffraction de la lumière conformément à la norme NF X11-666, et
-    des semoules dont la granulométrie moyenne est comprise entre 300 et 750 μm, calculée comme pour les farines ci-dessus.

Comme indiqué aux étapes (b) et (c), le procédé de l'invention admet deux modes de réalisation :

-    un premier mode selon lequel la ou les farines et la ou les semoules préparées à l'étape (a) sont soumises simultanément, c'est à dire en mélange les unes avec les autres, au traitement thermique de l'étape (b).
-    un second mode selon lequel la ou les farines et la ou les semoules préparées à l'étape (a) sont soumises séparément au traitement thermique de l'étape (b), puis mélangée à l'étape (c).

Le premier mode de réalisation du procédé selon l'invention comprend plus particulièrement les étapes suivantes :

(a) On prépare par tout moyen approprié au moins une farine et au moins une semoule, l'une et l'autre issue d'une ou plusieurs variété de maïs dont le péricarpe a été enlevé.

(b) On mélange la ou les farines avec la ou les semoules préparées à l'étape (a) à l'une et l'autre ou au mélange desquelles est ajoutée une substance alcaline, et on soumet ce mélange à un traitement thermique avec un taux d'hydratation compris entre environ 5 à 30 %.

c) On ajoute éventuellement un ou plusieurs additifs permettant de modifier et d'apporter de nouvelles fonctionnalités à la farine Masa obtenue.

Dans ce premier mode de réalisation, on préfère tout particulièrement réalisé le traitement thermique avec un taux d'hydratation compris entre environ 5 à 30 %.

Le second mode de réalisation du procédé selon l'invention comprend plus particulièrement les étapes suivantes :

(a) On prépare par tout moyen approprié au moins une farine et au moins une semoule, l'une et l'autre issue d'une ou plusieurs variété de maïs dont le péricarpe a été enlevé.

(b) On soumet, séparément, chacune des semoule et farine préparée à l'étape (a), à l'une et l'autre desquelles est ajoutée une substance alcaline, à un traitement thermique permettant la gélatinisation de l'amidon.

(c) On mélange une ou plusieurs farines et une ou plusieurs semoules ayant séparément subi le traitement de l'étape (b), et éventuellement on ajoute à ce mélange un ou plusieurs additifs permettant de modifier et d'apporter de nouvelles fonctionnalités à la farine Masa obtenue.

Dans ce second mode de réalisation, on préfère tout particulièrement réalisé le traitement thermique avec avec un taux d'hydratation compris entre environ 5 à 50 %.

Dans ce second mode de réalisation, l'étape (b) consiste à soumettre, séparément, d'une part la farine et d'autre par la semoule, de l'étape (a), à l'une et/ou l'autre, et avantageusement aux deux desquelles est ajoutée une substance alcaline, à un traitement thermique permettant la gélatinisation de l'amidon, puis on mélange à l'étape (c) les farines et semoules ayant subies le traitement thermique de l'étape (b).

L'addition de la substance alcaline avantageusement à la farine et à la semoule ou au mélange de celles-ci vise a augmenter le pH de celles-ci jusqu'à une valeur de l'ordre de 6 à 8,5. La substance alcaline peut être comme dans l'art antérieur de la chaux éteinte, mais tout autre matière alcaline permettant d'améliorer la gélatinisation de l'amidon et acceptable d'un point de vue alimentaire, peut être employée, comme par exemple le bicarbonate de sodium. La substance alcaline peut être ajoutée soit avant soit au moment du traitement thermique, mais pas après le traitement thermique.

Le goût Masa est un aspect important du procédé de l'invention, puisque spécifique des produits Tex Mex. Ce goût est lié directement au pH de la pâte et donc à la quantité de chaux éteinte utilisée. La chaux ajoutée modifie également le niveau de gélatinisation de l'amidon et donc l'aptitude à former une pâte.

Avantageusement, la quantité de substance alcaline ajoutée est, en poids, comprise entre 0,15 et 0,6 % par rapport à la quantité totale de farine et de semoule préparée de l'étape (a).

Un autre critère de qualité d'une farine Masa est le degré de gélatinisation responsable de la cohésion de la pâte et de sa machinabilité sur ligne. Contrairement au blé, les protéines du maïs ne sont pas capable de former un réseau tridimensionnel et donner une pâte. C'est donc en gélatinisant l'amidon de la farine de maïs qu'une pâte peut être formée. Le niveau de gélatinisation de la farine conditionne la qualité de la farine. L'optimum est recherché pour obtenir une pâte suffisamment cohésive et non collante qui soit facilement machinable sur ligne. Si la farine n'est pas assez gélatinisée, la pâte manque de cohésion et il est impossible de faire des chips. Au contraire, si la farine est trop gélatinisée, la pâte est très cohésive mais trop collante et impossible à laminer.

Avantageusement, la ou les farines et la ou les semoules ou le mélange de celles-ci ayant subi le traitement thermique de l'étape (b) présentent des degrés de gélatinisation compris entre 20 et 45 % mesurés selon la méthode décrite par Birch & Priestley (Die Särcke, 25(3), 98-100, 1973). Cette méthode consiste à préparer 2 fois 200 mg d'échantillon broyé, à traiter 200 mg de cet échantillon par 100 ml de KOH 0,2 M sous agitation pendant 10 minutes, et 200 mg de cet échantillon par 100 ml de KOH 0,4 M sous agitation pendant 100 minutes, puis à centrifuger chacun de ces échantillons à 3000tr/min pendant 10 minutes. On prélève alors 1 ml de surnageant de l'échantillon traité par KOH 0,2 M qu'on neutralise avec HCl 0,2 N (1 ml) en ajustant à 20 ml dans un tube de 25 ml. De même, on prélève 1 ml de surnageant de l'échantillon traité par KOH 0,4 M qu'on neutralise avec HCl 0,2 N (2 ml) en ajustant à 20 ml dans un tube de 25 ml. On additionne dans chaque tube 100 $\mu$l de réactif iodé ( 1 g $I_2$ + 4 g de KI dans 100 ml d'eau), puis on mélange délicatement et on détermine l'absorbance de chaque échantillon à 600 nm.

Le degré de gélatinisation est calculée d'après l'équation suivante :

$$\text{Degré de gélatinisation (\%)} = (DOE_{0,2M}/DOE_{0,4M}) \times 100$$

où $DOE_{0,2M}$ et $DOE_{0,4M}$ représentent respectivement la densité optique des échantillons traités par KOH 0,2M et KOH 0,4M.

Le traitement thermique selon l'étape (b) du procédé de l'invention est caractérisé par un apport simultané d'eau ou de vapeur, de la substance alcaline et d'énergie thermique permettant de gélatiniser l'amidon en un temps très court, inférieur à 1 heure, en particulier de 5 minutes, de 2 à 5 minutes, sans apporter trop d'énergie mécanique, par exemple un cisaillement, préjudiciable à la qualité de la farine Masa.

Différentes technologies de traitement thermique susceptible d'être utilisées dans l'étape (b) existent dans l'art antérieur. Parmi celles-ci, on peut citer : le cuiseur extrudeur, technologie Stéphan, etc...

Selon un mode de mise en oeuvre préféré de l'invention, le traitement thermique de l'étape (b) est réalisé avec une technique habituellement utilisée pour débactériser des sons, des germes et des farines, pour sécher et prégélatiniser des farines. Cette technique est basée sur la mise en suspension du produit en haute turbulence dans un courant d'air chauffé et en contact permanent avec une surface également chauffée. Un dispositif pour la mise en oeuvre de cette technique comporte deux parties : un cuiseur et un sécheur, chacun constitué d'un cylindre horizontal où une hélice horizontale permet de maintenir le produit contre les parois par centrifugation. Un circuit d'huile thermique assure le chauffage des cylindres grâce à un manteau coaxial.

Le cuiseur peut recevoir de l'eau et/ou de la vapeur et divers autres additifs, comme bien entendu la chaux éteinte. Ainsi, sous l'effet de l'eau associé à l'apport d'énergie thermique, les propriétés rhéologiques (viscosité, capacité d'absorption d'eau, cohésion, etc...) de l'amidon sont modifiées. Le produit est ensuite transféré dans le sécheur, où de l'air chauffé via un échangeur de chaleur est injecté dans le cylindre. Le produit est alors séché par conduction (parois chauffées) et par convection (air chauffé). Les principaux paramètres à réguler sont les débits matières et eau, les temps de séjour et les températures utilisées.

Les farine et semoule de l'étape (a) du procédé de l'invention sont séparément ou en mélange traitées thermiquement sur cet outil en apportant de l'eau ou de la vapeur et de la chaux puis immédiatement séchées. L'eau apportée associée au traitement thermique permet de gélatiniser l'amidon. Il s'agit donc d'un traitement partiel permettant à l'amidon contenu dans la farine d'absorber lors de la phase de pétrissage l'eau de coulage et donner la cohésion nécessaire au laminage. La chaux supplémentaire éventuellement apporté durant ce traitement thermique permet de faciliter la gélatinisation tout en apportant le goût caractéristique Tex Mex.

Selon le premier mode de réalisation du procédé de l'invention, le traitement thermique de l'étape (b) réalisée selon cette technique de mise en suspension en haute turbulence dans un courant d'air chauffé et en contact permanent avec une surface également chauffée, est avantageusement effectuée séparément sur chacune des farine(s) et semoule(s) préparées à l'étape (a) avec les principaux paramètres ci-dessus définis de la façon suivante :

- un débit de matière (farine ou semoule préparées à l'étape (a)) de l'ordre de 100 à 200 kg/h,
- un débit eau calculé pour apporter de l'ordre de 5 à 40 % d'eau par rapport au débit de matière,
- un débit de chaux éteinte calculé pour apporter entre 0,15 et 0,6 % par rapport au débit de matière,
- des températures de cuisson et de séchage comprises entre environ 120 et 200°C.

Selon le second mode de réalisation du procédé de l'invention, le traitement thermique de l'étape (b) réalisée selon cette technique de mise en suspension en haute turbulence dans un courant d'air chauffé et en contact permanent avec une surface également chauffée, est avantageusement effectuée séparéle mélange des farine(s) et semoule(s) préparées à l'étape (a) avec les principaux paramètres ci-dessus définis de la façon suivante :

- un débit de matière, farine et semoule, de l'ordre de 150 kg/h,
- un débit eau calculé pour apporter de l'ordre de 8 % d'eau par rapport au débit de matière,
- un débit de chaux éteinte calculé pour apporter de l'ordre de 0,3 % par rapport au débit de matière,
- des températures de cuisson et de séchage de l'ordre de 150°C,
- un degré de gélatinisation de l'ordre de 30 %.

Si les farines et semoules ont séparément subies le traitement de l'étape (b), celles-ci sont mélangées à l'étape (c).

Cette étape (c) consiste dans les deux modes de réalisation du procédé de l'invention à ajouter éventuellement au mélange de farine(s) et semoules ayant subies le traitement thermique un ou plusieurs additifs permettant de modifier et d'apporter de nouvelles fonctionnalités à la farine Masa obtenue par le procédé de l'invention, comme une meilleur capacité d'absorption ou une meilleure viscosité, particulièrement utile dans le cas de la fabrication de table tortillas où l'on recherche une meilleure souplesse pour rouler les produits, dénommé en anglais rollability. A titre d'exemple de tels additifs on peut citer la cellulose, la carboxyméthyl cellulose et les autres dérivés de la cellulose qui apportent une meilleure capacité d'absorption d'eau et donc une meilleure souplesse sur le produit fini. Des conservateurs du type de l'acide propionique ou sorbique peuvent aussi être ajoutés pour prolonger la durée de vie des produits finis.

Le procédé de l'invention est remarquable en ce qu'il permet d'obtenir une farine Masa présentant un degré de gélatinisation compris entre 20 et 45 % mesuré selon la méthode décrite par Birch & Priestley (Die Särcke, 25(3), 98-100, 1973), un pH compris entre 6 et 8,5, une granulométrie dont la taille moyenne des particules (D50) est comprise entre 150 et 400 μm et une humidité finale comprise entre 7 et 12 %. La présente invention concerne donc une farine Masa présentant ces caractéristiques tout particulièrement adaptées à la préparation de produits au goût mexicain.

Le procédé de l'invention peut être mis en oeuvre avec des farines et des semoules, définies précédemment, préparées à partir de toute variété de maïs dont le péricarpe a été enlevé. Il peut s'agir de variétés américaines de maïs Denté qui ne sont pas cultivées en Europe ou de variétés européennes de maïs Corné Denté. Un des avantages du procédé selon la présente invention est de permettre l'utilisation des variétés de maïs Cornés Dentés pour la fabrication de farine Masa. En effet, ces variétés sont bien connues et caractérisées, notamment par la Demanderesse, et il est donc possible de leur apporter des modifications d'ordre technologiques, grâce notamment aux outils de sélection, tout en garantissant une totale traçabilité.

Le procédé de l'invention est plus particulièrement adapté aux variétés de maïs corné denté telles que les variétés connues sous les dénomination Banguy ou Anjou. La variété de maïs Corné Denté désignée Safrane, sélectionnée sur des critères rhéologiques, notamment de viscosité, et de machinabilité, notamment passage dans le sheeter, offre des résultats remarquables dans le procédé de l'invention. La variété maïs corné denté Safrane est enregistrée au catalague Français tenu par Comité Technique Permanent de la Sélection (CTPS) sous le numéro de dépot LZM 342/01 et est accessible au catalogue de la Société Limagrain. En effet, les farines et semoules issues de cette variété, conformément à l'étape (a) du procédé de l'invention, bénéficie d'une très grande souplesse et supporte facilement les variations du procédé. Cette farine, après traitement thermique spécifique permet ainsi d'apporter la cohésion nécessaire à la fabrication de la pâte préparé à partir de la farine Masa de l'invention en évitant tout problème de collant limitant le passage en machine.

L'invention concerne donc tout particulièrement l'utilisation d'une farine ou d'un mélange de farines et d'une semoule ou d'un mélange de semoules issues d'une ou plusieurs variétés de maïs Corné Denté, et plus particulièrement de la variété connue sous la dénomination Safrane pour la préparation d'une farine Masa, ainsi qu'une farine Masa préparée, notamment selon le procédé de l'invention, à partir de farine et/ou de semoule issues d'une ou plusieurs variétés de maïs Corné Denté, et plus particulièrement de la variété connue sous la dénommination Safrane.

L'invention concerne donc également une farine et une semoule préparée à l'étape (a) du procédé de l'invention. Une farine préparée à partir d'une variété de maïs dont le péricarpe a été enlevé selon l'invention est caractérisée par une granulométrie moyenne comprise entre 75 et 200 µm, calculée par détermination laser de la granulométrie selon le principe de diffraction de la lumière conformément à la norme NF X11-666. Une semoule préparée à partir d'une variété de maïs dont le péricarpe a été enlevé selon l'invention est caractérisée par une granulométrie moyenne comprise entre 300 et 750 µm calculée comme précédemment pour les farines.

L'invention concerne aussi une farine et une semoule préparée conformément à l'étape (b) du procédé de l'invention. De telles farines et semoules présentent un pH compris de l'ordre de 6 à 8,5 et un degré de gélatinisation compris entre 20 et 45 % mesurés selon la méthode décrite par Birch & Priestley.

L'invention concerne également le dispositif décrit précédemment pour la mise en oeuvre du traitement thermique de l'étape (b). Ce dispositif est caractérisé en ce qu'il comprend :

- Un cuiseur constitué d'un cylindre horizontal où une hélice horizontale permet de maintenir le produit contre les parois par centrifugation, pouvant recevoir de l'eau et/ou de la vapeur
- Un sécheur constitué d'un cylindre horizontal où une hélice horizontale permet de maintenir le produit contre les parois par centrifugation, et où de l'air chauffé via un échangeur de chaleur est injecté dans le cylindre.
- Un circuit, tel qu'un circuit d'huile thermique, assurant le chauffage des cylindres grâce à un manteau coaxial.

L'invention concerne encore, les produits au goût mexicain fabriqués à partir d'une farine Masa selon l'invention.

Le procédé de l'invention présente de nombreux avantages par rapport au procédé de l'art antérieur, parmi ceux-ci on peut citer plus particulièrement :

- l'utilisation de variétés de maïs Corné Denté cultivées en Europe, donc facile d'approvisionnement et dont le contrôle des procédés d'obtention est parfait
- la maîtrise de la granulométrie et de la mouture,
- la maîtrise du degré de gélatinisation,
- la maîtrise du goût,
- diminution du risque de présence de résidus phytosanitaires et mycotoxines du fait de l'élimination par voie mécanique des enveloppes du grain.
- la mise en oeuvre d'investissement et d'une main d'oeuvre limités,
- l'absence de lavage du grain, et pas d'élimination du péricarpe, donc pas d'effluent à gérer,
- pas de nettoyage particulier.

D'autres avantages et caractéristique de l'invention apparaîtront dans les exemples qui suivent concernant une farine Masa de l'invention, sa préparation et son utilisation pour la fabrication d'un produit au goût mexicain.

Exemple 1 : Préparation de farine Masa avec des variétés Cornés Denté et plus particulièrement avec la variété de maïs Safrane.

Cet exemple 1 correspond au mode de réalisation du procédé de l'invention dans lequel la ou les farines et la ou les semoules sont soumises séparément au traitement thermique.

a) Choix de deux farines et d'une semoule issue de la variété Safrane dont les granulométries sont centrées sur les tailles moyennes suivantes :

|  | farine 1 | farine 2 | semoule 1 |
|---|---|---|---|
| granulométrie D50 | 70 μm | 200 μm | 600 μm |

b) Traitement séparé des 3 fractions et obtention du degré de gélatinisation optimal, à partir des paramètres suivants :

|  | farine 1 | farine 2 | semoule 1 |
|---|---|---|---|
| température cuiseur | 150°C | 150°C | 180°C |
| débit matière | 150 kg/h | 150 kg/h | 150 kg/h |
| % eau/débit matière | 8 % | 16 % | 30 % |
| % chaux éteinte/débit matière | 0,3 % | 0,3 % | 0,3 % |
| température sécheur | 150 | 150 | 180 |
| DEGRÉ DE GÉLATINISATION | 30 % | 28 % | 35 % |

c) Réalisation du mélange.

|  | farine 1 | farine 2 | semoule 1 |
|---|---|---|---|
| dosage | 40 % | 50 % | 10 % |

La farine Masa résultant du mélange présente les caractéristiques suivantes :

- degré de gélatinisation moyen de l'ordre de 30 %,
- granulométrie voisine de 200 μm,
- humidité finale comprise entre 7 et 12 %.

Exemple 2 : Préparation de farine Masa avec des variétés Cornés Denté et plus particulièrement avec la variété de maïs Safrane.

Cet exemple 2 correspond au mode de réalisation du procédé de l'invention dans lequel la ou les farines et la ou les semoules sont soumises ensemble au traitement thermique.

a) Choix de deux farines et d'une semoule issue de la variété Safrane dont les granulométries sont centrées sur les tailles moyennes suivantes :

|  | farine 1 | farine 2 | semoule 1 |
|---|---|---|---|
| granulométrie D50 | 70 µm | 200 µm | 600 µm |

b) Traitement simultané des 3 fractions de l'étape (a) mélangées et obtention du degré de gélatinisation optimal à partir des paramètres ci-dessous :

|  | Mélange farine 1, farine 2 et semoule 1 |
|---|---|
| température cuiseur | 150°C |
| débit matière | 150 kg/h |
| % eau/débit matière | 8 % |
| % chaux éteinte/débit matière | 0,3 % |
| température sécheur | 150 |
| DEGRÉ DE GÉLATINISATION | 30 % |

La farine Masa résultant de ce traitement présente les caractéristiques suivantes :

- degré de gélatinisation moyen de l'ordre de 30 %,
- granulométrie voisine de 200 µm,
- humidité finale comprise entre 7 et 12 %.

Exemple 3 : Préparation de Tortillas Chips avec la farine Masa de l'exemple 1 ou de l'exemple 2.

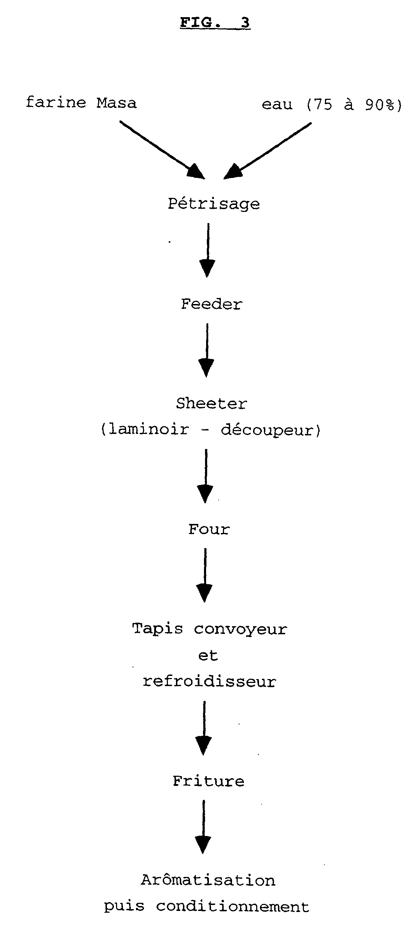

Cette préparation est illustrée par la représentation schématique donnée à la figure 3 en annexe.

a) Préparation de la pâte.

La farine de l'exemple 1 est mélangée avec 88 % d'eau, puis pétrie dans un mélangeur à axe horizontal pendant une durée de 7 minutes.

b) Passage dans le sheeter.

La pâte est incorporée dans le feeder qui est l'appareil permettant d'alimenter de façon continue le sheeter. La vitesse de celui-ci est moyenne. Dans tous les cas, c'est à ce niveau que la pâte doit être suffisamment cohésive pour former une pâte et être laminée sans pour autant être trop collante. En effet, dès que la pâte présente un degré de gélatinisation trop élevé, elle devient collante, adhère aux cylindres limitant ainsi considérablement le débit et la qualité des tortillas chips finales.

c) Passage dans le four.

Un four utilisant le gaz et les infra rouges et à 3 niveaux avec retournement des produits est utilisé. L'objectif est de poursuivre la gélatinisation et apporter la cohésion finale de la chips humide. C'est également au cours de cette étape qu'une partie de l'eau apportée lors du pétrissage est éliminée. Les paramètres utilisés sont une température comprise entre 285 et 310 °C (infra rouge et gaz). Le temps de séjour moyen des chips se situe aux environs de 25 secondes.

d) Refroidissement des chips.

Les chips sont refroidies progressivement à l'aide d'un convoyeur. Cette étape est importante car elle permet l'équilibrage du produit avec une répartition homogène de l'humidité au coeur du produit.

e) Friture des tortillas chips.

Les chips "équilibrées" sont ensuite plongées dans de l'huile à environ 200°C pendant environ 45 secondes. L'eau sous forme liquide passe ainsi sous forme de vapeur et tend à sortir du produit entraînant une légère expansion donnant le blistering final et donc la texture spécifique de la tortillas chips.

Les chips obtenues présentent les mêmes caractéristiques organoleptiques que les chips obtenues avec une farine Masa et le procédé de l'art antérieur.

**Revendications**

1.   Procédé de préparation d'une farine Masa, **caractérisé en ce qu'**il comprend les étapes suivantes :

(a) on prépare par tout moyen approprié au moins une farine et au moins une semoule, l'une et l'autre issue d'une ou plusieurs variété de maïs dont le péricarpe a été enlevé,
(b) on apporte simultanément à la ou les farines et à la ou les semoules préparées à l'étape (a) ou au mélange de celles-ci une substance alcaline, de l'eau ou de la vapeur et de l'énergie thermique, ce traitement thermique permettant de gélatiniser l'amidon en un temps très court inférieur à 1 heure,
(c) on mélange la ou les farines et la ou les semoules si celles-ci n'ont pas été mélangées lors du traitement thermique de l'étape (b), et éventuellement on ajoute un ou plusieurs additifs permettant de modifier et d'apporter de nouvelles fonctionnalités à la farine Masa obtenue.

2.   Procédé de préparation d'une farine Masa, selon la revendication 1, **caractérisé en ce qu'**il comprend les étapes suivantes :

(a) on prépare par tout moyen approprié au moins une farine et au moins une semoule, l'une et l'autre issue d'une ou plusieurs variété de maïs dont le péricarpe a été enlevé,
(b) on mélange la ou les farines avec la ou les semoules préparées à l'étape (a), à l'une et l'autre ou au mélange desquelles est ajoutée une substance alcaline, et on apporte à ce mélange de l'eau ou de la vapeur et de l'énergie thermique, ledit traitement thermique étant réalisé avec un taux d'hydratation compris entre 5 à 30 %,
(c) on ajoute éventuellement un ou plusieurs additifs permettant de modifier et d'apporter de nouvelles fonctionnalités à la farine Masa obtenue.

3.   Procédé de préparation d'une farine Masa, selon la revendication 1, **caractérisé en ce qu'**il comprend les étapes suivantes :

(a) on prépare par tout moyen approprié au moins une farine et au moins une semoule, l'une et l'autre issue d'une ou plusieurs variété de maïs dont le péricarpe a été enlevé.
(b) on apporte, séparément, à chacune des semoules et farines préparées à l'étape (a) une substance alcaline, de l'eau ou de la vapeur et de l'énergie thermique, ce traitement thermique permettant de gélatiniser l'amidon en un temps très court inférieur à 1 heure,
(c) on mélange une ou plusieurs farines et une ou plusieurs semoules ayant séparément subi le traitement de l'étape (b), et éventuellement on ajoute à ce mélange un ou plusieurs additifs permettant de modifier et d'apporter de nouvelles fonctionnalités à la farine Masa obtenue.

4.   Procédé selon la revendication 3, **caractérisé en ce que** le traitement thermique de l'étape (b) est réalisé avec un taux d'hydratation compris entre 5 à 50 %.

5.   Procédé selon l'un quelconque des revendications précédentes, **caractérisé en ce que** à l'étape (a) on prépare :

-   une ou plusieurs farines dont la granulométrie moyenne est comprise entre 75 et 200 µm, calculée par détermination laser de la granulométrie selon le principe de diffraction de la lumière, et

- une ou plusieurs semoules dont la granulométrie moyenne est comprise entre 300 et 750 µm, calculée comme pour les farines ci-dessus.

6. Procédé selon l'une quelconque des revendications précédentes, **caractérisé en ce que** à l'étape (b) on ajoute une quantité de substance alcaline suffisante pour que la farine et la semoule ou le mélange de celles-ci présentent un pH de 6 à 8,5.

7. Procédé selon l'une quelconque des revendications précédentes, **caractérisé en ce que** la quantité de substance alcaline ajoutée est, en poids, comprise entre 0,15 et 0,6 % par rapport à la quantité totale de farine et de semoule préparée de l'étape (a).

8. Procédé selon l'une quelconque des revendications précédentes, **caractérisé en ce que** la substance alcaline est de la chaux éteinte.

9. Procédé selon l'une quelconque des revendications précédentes, **caractérisé en ce que** le traitement thermique de l'étape (b) est réalisé de façon à obtenir des farines et semoules ou un mélange de celles-ci dont le degré de gélatinisation est compris entre 20 et 45 % mesurés selon la méthode décrite par Birch & Priestley.

10. Procédé selon l'une quelconque des revendications précédentes, **caractérisé en ce que** le traitement thermique de l'étape (b) consiste à apporter à chacune des farines et semoules préparées à l'étape (a) ou au mélange de celles-ci une substance alcaline, de l'eau ou de la vapeur et de l'énergie thermique permettant de gélatiniser l'amidon en un temps très court de 5 minutes.

11. Procédé selon l'une quelconque des revendications précédente, **caractérisée en ce que** le traitement thermique de l'étape (b) consiste à mettre chacune des farines et semoules de l'étape (a) ou le mélange de celles-ci en suspension en turbulence dans un courant d'air chauffé et en contact permanent avec une surface également chauffée.

12. Procédé selon la revendication 11, **caractérisé en ce que** le traitement thermique de l'étape (b), consistant à mettre en suspension en turbulence séparément chacune des farine(s) et semoule(s), est réalisée avec les principaux paramètres ci-dessus :

    - un débit de matière, farine ou semoule, de 100 à 200 kg/h,
    - un débit eau calculé pour apporter 5 à 40 % d'eau par rapport au débit de matière,
    - un débit de chaux éteinte calculé pour apporter entre 0,15 et 0,6 % par rapport au débit de matière,
    - des températures de cuisson et de séchage comprises entre 120 et 200°C.

13. Procédé selon la revendication 11, **caractérisé en ce que** le traitement thermique de l'étape (b), consistant à mettre en suspension en turbulence le mélange de farine(s) et de semoule(s), est réalisée avec les principaux paramètres ci-dessus :

    - un débit de matière, farine et semoule, de 150 kg/h,
    - un débit eau calculé pour apporter de 8 % d'eau par rapport au débit de matière,
    - un débit de chaux éteinte calculé pour apporter de 0,3 % par rapport au débit de matière,
    - des températures de cuisson et de séchage de 150°C,
    - un degré de gélatinisation de 30 %.

14. Procédé selon l'une quelconque des revendications précédentes, **caractérisé en ce que** les additifs éventuellement ajoutés à l'étape (c) sont choisis parmi la cellulose, la carboxyméthyle cellulose et les autres dérivés de la cellulose qui apportent une meilleure capacité d'absorption d'eau et/ou des conservateurs.

15. Procédé selon l'une quelconque des revendications précédentes, **caractérisé en ce que** les farines et/ou les semoules préparées à l'étape (a) sont issus d'une ou plusieurs variétés de maïs Corné Denté dont le péricarpe a été enlevé.

16. Procédé selon la revendication 15, **caractérisé en ce que** la variété de maïs Corné Denté est la variété Safrane.

17. Une farine issue d'une variété de maïs dont le péricarpe a été enlevé, qui présente une granulométrie moyenne comprise entre 75 et 200 μm, calculée par détermination laser de la granulométrie selon le principe de diffraction de la lumière après l'étape (a) du procédé selon l'une quelconque des revendications 1 à 16, et ayant subi l'étape (b) du procédé selon l'une quelconque des revendications 1 à 16, **caractérisée en ce qu'**elle présente un pH compris entre 6 et 8,5 et un degré de gélatinisation compris entre 20 et 45 % mesurés selon la méthode décrite par Birch & Priestley.

18. Une farine selon la revendication 17, **caractérisée en ce qu'**elle est issue d'une variété de maïs Corné Denté et plus particulièrement de la variété Safrane.

19. Une semoule issue d'une variété de maïs dont le péricarpe a été enlevé, qui présente une granulométrie moyenne comprise entre 300 et 750 μm calculée par détermination laser de la granulométrie selon le principe de diffraction de la lumière après l'étape (a) du procédé selon l'une quelconque des revendications 1 à 16, et ayant subi l'étape (b) du procédé selon l'une quelconque des revendications 1 à 16, **caractérisée en ce qu'**elle présente un pH compris entre 6 et 8,5 et un degré de gélatinisation compris entre 20 et 45 % mesurés selon la méthode décrite par Birch & Priestley.

20. Une semoule selon la revendication 19, **caractérisée en ce qu'**elle est issue d'une variété de maïs Corné Denté et plus particulièrement de la variété Safrane.

**Claims**

1. A method for preparing a masa flour, wherein it comprises the following steps :

   (a) preparing by any appropriate means, at least one flour and at least one semolina, the one and the other originating from one or a plurality of varieties of corn from which the pericarp has been removed ;
   (b) at the same time, an alkaline substance, water or steam together with thermal energy is applied to the flour (s) and to the semolina(s) prepared in step (a) or to the mixture thereof, said thermal treatment enabling the starch to gellify in a very brief period of time that is less than one hour ;
   (c) the flour(s) and the semolina(s) are mixed, if they were not mixed at the time of thermal treatment of step (b), and one or a plurality of additives may be added, which allow modifying or endowing new functionalities to the masa flour obtained.

2. A method for preparing a masa flour according to Claim 1, wherein said method comprises the following steps :

   (a) by any appropriate means at least one flour and at least one semolina, the one and the other originating from one or a plurality of varieties of corn from which the pericarp has been removed ;
   (b) the flour(s) are mixed with the semolina(s) prepared in step (a), an alkaline substance is added to the one and the other or to the mixture thereof, and water or steam together with thermal energy is applied to the said mixture, said thermal treatment being realized using a hydration rate of between 5 to 30 % ;
   (c) one or a plurality of additives may be added enabling modifying and endowing new functionalities to the masa flour obtained.

3. A method for preparing a masa flour according to Claim 1, wherein said method comprises the following steps :

   (a) preparing by any appropriate means, at least one flour and at least one semolina, both originating from one or a plurality of corn from which the pericarp has been removed.
   (b) an alkaline substance, water or steam together with thermal energy is applied separately to each of the semolinas and flours prepared in step (a), said thermal treatment enabling the starch to gellify in a very brief period of time that is less than one hour.
   (c) one or a plurality of flours and one or a plurality of semolinas are mixed, each having undergone the treatment described in step (b), and eventually one or a plurality of additives are added to this mixture, which enable modifying and endowing new functionalities to the masa flour obtained.

4. A method according to Claim 3, wherein the thermal treatment of step (b) is realized using a hydration rate of between 5 and 50 %.

5. A method according to any one of the preceding claims, wherein in step (a) the followings are prepared :

- one or a plurality of flours whose average granulometry is between 75 and 200 μm, calculated by laser determination of granulometry according to the light diffraction principal and
- one or a plurality of semolinas whose average granulometry is between 300 and 750 μm, calculated as for the above flours.

6. A method according to any one of the preceding claims, wherein in step (b) a quantity of alkaline substance is added that is sufficient that the flour and the semolina or the mixture thereof have a pH of from 6 to 8.5.

7. A method according to any one of the preceding claims, wherein the quantity of alkaline substance added is between 0.15 and 0.6% by weight relative to the total quantity of flour and semolina prepared in step (a).

8. A method according to any one of the preceding claims, wherein the alkaline substance is slaked lime.

9. A method according to any one of the preceding claims, wherein the thermal treatment of step (b) is realized in such a fashion as to obtain flours and semolinas or a mixture thereof whose degree of gelatinization is between 20 and 45 % measured using the method described by Birch & Priestley.

10. A method according to any one of the preceding claims, wherein the thermal treatment of step (b) comprises adding an alkaline substance, water or steam together with thermal energy to each of the flours and semolinas prepared in step (a) or to a mixture thereof and allowing the starch to gellify in a very brief time of 5 minutes.

11. A method according to any one of the preceding claims, wherein the thermal treatment of step (b) comprises placing each of the flours or semolinas of step (a) or the mixture thereof in turbulent suspension in a heated air current and in constant contact with a likewise heated surface.

12. A method according to Claim 11, wherein the thermal treatment of step (b), consisting of placing each of the flour (s) and semolina(s) separately in turbulent suspension, is done with the principal parameters above :

   - a material, flour and semolina, delivery of 100 to 200 kg / h ;
   - a water delivery calculated to provide 5 to 40 % of water relative to the material delivery ;
   - a slaked lime delivery calculated to provide between 0.15 and 0.6 % relative to the material flow ;
   - cooking and drying temperatures between 120 and 200 °C.

13. A method according to Claim 11, wherein the thermal treatment of step (b), consisting of placing each of the flour (s) and semolina(s) separately in turbulent suspension, is done with the principal parameters above :

   - a material, flour and semolina, delivery of 150 kg / h ;
   - a water delivery calculated to provide 8% water relative to the material delivery ;
   - a slaked lime delivery calculated to provide 0.3 % relative to material delivery ;
   - cooking and drying temperatures of 150 °C ;
   - a degree of gelification of 30 %.

14. A method according to any one of the preceding claims, wherein the additives eventually added at step (c) are chosen from among cellulose, carboxymethyl cellulose and the other cellulose derivatives that provide a better water absorption capacity and / or preservatives.

15. A method according to any one of the preceding claims, wherein the flours and / or the semolinas prepared in step (a) are produced from one or a plurality of varieties of flint dent corn whose pericarp has been removed.

16. A method according to Claim 15, wherein the variety of flint dent corn is the Safrane variety.

17. A flour produced from a variety of corn, whose pericarp has been removed, which has an average granulometry of between 75 and 200 μm, calculated by laser granulometry determination according to the light diffraction principle after step (a) of the method according to any one of Claims 1 to 16 and having undergone step (b) of the method according to an one of Claims 1 to 16, wherein it has a pH between 6 and 8.5 and a degree of gelatinization of between 20 and 45 % measured according to the method described by Birch & Priestley.

18. A flour according to Claim 17, wherein it is produced from a variety of dent flint corn and more particularly from the Safrane variety.

19. A semolina produced from a variety of corn whose pericarp has been removed, which has an average granulometry of between 300 and 750 µm calculated by laser granulometry determination using the light diffraction principal after step (a) of the method according to any one of Claims 1 to 16 and having undergone step (b) of the method according to any one of Claims 1 to 16, wherein it has a pH of between 6 and 8.5 and a degree of gelatinization of between 20 to 45 % measured according to the method described by Birch & Priestley.

20. A semolina according to Claim 19, wherein it is produced from a variety of dent flint corn and more particularly from the Safrane variety.

**Patentansprüche**

1. Verfahren zur Bereitung eines Masa-Mehls, **dadurch gekennzeichnet, dass** es die folgenden Schritte aufweist:

   (a) man bereitet durch jedwedes geeignete Mittel mindestens ein Mehl und mindestens einen Grieß, wobei sowohl das Mehl als auch der Grieß aus einer oder mehreren Sorten Mais gewonnen wurden, deren Fruchthülle entfernt wurde,
   (b) man fügt gleichzeitig dem oder den Mehlen und dem oder den Grießen, die in Schritt (a) bereitet wurden, oder der Mischung dieser eine alkalische Substanz, Wasser oder Dampf und thermische Energie hinzu, wobei diese thermische Behandlung ein Gelieren der Stärke in einer sehr kurzen Zeit von weniger als einer Stunde ermöglicht,
   (c) man mischt das Mehl oder die Mehle und den Grieß oder die Grieße, wenn diese bei der thermischen Behandlung von Schritt (b) noch nicht gemischt worden sind, und man fügt eventuell einen oder mehrere Zusatzstoffe hinzu, mit denen das gewonnene Masa-Mehl modifiziert werden kann und ihm neue Funktionalitäten verliehen werden können.

2. Verfahren zur Bereitung eines Masa-Mehls nach Anspruch 1, **dadurch gekennzeichnet, dass** es die folgenden Schritte aufweist:

   (a) man bereitet durch jedwedes geeignete Mittel mindestens ein Mehl und mindestens einen Grieß, wobei sowohl das Mehl als auch der Grieß aus einer oder mehreren Sorten Mais gewonnen wurden, deren Fruchthülle entfernt wurde,
   (b) man mischt das Mehl oder die Mehle mit dem Grieß oder den Grießen, die in Schritt (a) bereitet wurden, wobei dem einen oder anderen Mehl oder Grieß oder der Mischung eine alkalische Substanz hinzugefügt wurde, und man fügt dieser Mischung Wasser oder Dampf und thermische Energie hinzu, wobei die besagte thermische Behandlung mit einem Hydratisierungsgrad von 5 bis 30 Prozent erfolgt,
   (c) man fügt eventuell einen oder mehrere Zusatzstoffe hinzu, mit denen das gewonnene Masa-Mehl modifiziert werden kann und ihm neue Funktionalitäten verliehen werden können.

3. Verfahren zur Bereitung eines Masa-Mehls nach Anspruch 1, **dadurch gekennzeichnet, dass** es die folgenden Schritte aufweist:

   (a) man bereitet durch jedwedes geeignete Mittel mindestens ein Mehl und mindestens einen Grieß, wobei sowohl das Mehl als auch der Grieß aus einer oder mehreren Sorten Mais gewonnen wurden, deren Fruchthülle entfernt wurde,
   (b) man fügt jedem der Grieße und Mehle, die in Schritt (a) bereitet wurden, separat eine alkalische Substanz, Wasser oder Dampf und thermische Energie hinzu, wobei diese thermische Behandlung ein Gelieren der Stärke in einer sehr kurzen Zeit von weniger als einer Stunde ermöglicht,
   (c) man mischt ein oder mehrere Mehle und einen oder mehrere Grieße, die separat der Behandlung von Schritt (b) unterzogen wurden, und man fügt dieser Mischung eventuell einen oder mehrere Zusatzstoffe hinzu, mit denen das gewonnene Masa-Mehl modifiziert werden kann und ihm neue Funktionalitäten verliehen werden können.

4. Verfahren nach Anspruch 3, **dadurch gekennzeichnet, dass** die thermische Behandlung von Schritt (b) mit einem Hydratisierungsgrad von 5 bis 50 Prozent erfolgt.

**5.** Verfahren nach einem der vorhergehenden Ansprüche, **dadurch gekennzeichnet, dass** man in Schritt (a) Folgendes bereitet:

- ein oder mehrere Mehle mit einer durchschnittlichen Korngröße von 75 bis 200 µm, die durch Laser-Korngrößenbestimmung gemäß dem Prinzip der Lichtbrechung berechnet wurde, und
- einen oder mehrere Grieße mit einer durchschnittlichen Korngröße von 300 bis 750 µm, die wie bei den o. g. Mehlen berechnet wird.

**6.** Verfahren nach einem der vorhergehenden Ansprüche, **dadurch gekennzeichnet, dass** man in Schritt (b) eine ausreichende Menge an alkalischer Substanz hinzufügt, damit das Mehl und der Grieß oder die Mischung dieser einen pH-Wert von 6 bis 8,5 aufweist.

**7.** Verfahren nach einem der vorhergehenden Ansprüche, **dadurch gekennzeichnet, dass** die hinzugefügte Menge alkalischer Substanz hinsichtlich ihres Gewichts 0,15 bis 0,6 Prozent im Verhältnis zur in Schritt (a) bereiteten Gesamtmehl- und -grießmenge beträgt.

**8.** Verfahren nach einem der vorhergehenden Ansprüche, **dadurch gekennzeichnet, dass** die alkalische Substanz Löschkalk ist.

**9.** Verfahren nach einem der vorhergehenden Ansprüche, **dadurch gekennzeichnet, dass** die thermische Behandlung von Schritt (b) so durchgeführt wird, dass man Mehle und Grieße oder eine Mischung dieser erhält, deren Geliergrad von 20 bis 45 Prozent beträgt, gemessen gemäß der von Birch & Priestley beschriebenen Methode.

**10.** Verfahren nach einem der vorhergehenden Ansprüche, **dadurch gekennzeichnet, dass** die thermische Behandlung von Schritt (b) darin besteht, jedem der Mehle und Grieße, die in Schritt (a) bereitet wurden, oder der Mischung dieser eine alkalische Substanz, Wasser oder Dampf und thermische Energie hinzuzufügen, wodurch die Stärke in einer sehr kurzen Zeit von fünf Minuten gelieren kann.

**11.** Verfahren nach einem der vorhergehenden Ansprüche, **dadurch gekennzeichnet, dass** die thermische Behandlung von Schritt (b) darin besteht, alle Mehle und Grieße von Schritt (a) oder die Mischung dieser in einem Warmluftstrom und in ständigem Kontakt mit einer ebenfalls geheizten Fläche schwebend zu verwirbeln.

**12.** Verfahren nach Anspruch 11, **dadurch gekennzeichnet, dass** die thermische Behandlung von Schritt (b), die darin besteht, alle Mehle und Grieße voneinander getrennt schwebend zu verwirbeln, mit den folgenden Hauptparametern durchgeführt wird:

- einem Stoffdurchsatz - Mehl oder Grieß - von 100 bis 200 kg/h,
- einem Wasserdurchsatz, der so berechnet wurde, dass der Wassereintrag im Verhältnis zum Stoffdurchsatz 5 bis 40 Prozent beträgt,
- einem Durchsatz von Löschkalk, der so berechnet wurde, dass der Löschkalkeintrag im Verhältnis zum Stoffdurchsatz 0,15 bis 0,6 Prozent beträgt,
- Koch- und Trocknungstemperaturen von 120 bis 200 °C.

**13.** Verfahren nach Anspruch 11, **dadurch gekennzeichnet, dass** die thermische Behandlung von Schritt (b), die darin besteht, die Mischung aus Mehl(en) und Grieß(en) schwebend zu verwirbeln, mit den folgenden Hauptparametern durchgeführt wird:

- einem Stoffdurchsatz - Mehl oder Grieß - von 150 kg/h,
- einem Wasserdurchsatz, der so berechnet wurde, dass der Wassereintrag im Verhältnis zum Stoffdurchsatz 8 Prozent beträgt,
- einem Durchsatz von Löschkalk, der so berechnet wurde, dass der Löschkalkeintrag im Verhältnis zum Stoffdurchsatz 0,3 Prozent beträgt,
- Koch- und Trocknungstemperaturen von 150 °C,
- einem Geliergrad von 30 Prozent.

**14.** Verfahren nach einem der vorhergehenden Ansprüche, **dadurch gekennzeichnet, dass** die Zusatzstoffe, die eventuell in Schritt (c) hinzugefügt werden, aus Zellulose, Carboxymethylzellulose und den anderen Derivaten der Zellulose ausgewählt wurden, die eine bessere Fähigkeit zur Absorption von Wasser und/oder Konservierungsstoffen verschaffen.

**15.** Verfahren nach einem der vorhergehenden Ansprüche, **dadurch gekennzeichnet, dass** die Mehle und/oder Grieße, die in Etappe (a) bereitet wurden, aus einer oder mehreren Sorten Zahn-Hartmais gewonnen wurden, deren Fruchthülle entfernt wurde.

**16.** Verfahren nach Anspruch 15, **dadurch gekennzeichnet, dass** die Zahn-Hartmaissorte die Sorte Safrane ist.

**17.** Ein Mehl, das aus einer Sorte Mais gewonnen wurde, deren Fruchthülle entfernt wurde, der eine durchschnittliche Korngröße von 75 bis 200 μm aufweist, die durch Laser-Korngrößenbestimmung gemäß dem Prinzip der Lichtbrechung nach dem Schritt (a) des Verfahrens nach einem der Ansprüche 1 bis 16 berechnet wurde, und welches den Schritt (b) des Verfahrens nach einem der Ansprüche 1 bis 16 durchlaufen hat, **dadurch gekennzeichnet, dass** es einen pH-Wert von 6 bis 8,5 aufweist und einen Geliergrad von 20 bis 45 Prozent, gemessen gemäß der von Birch & Priestley beschriebenen Methode.

**18.** Ein Mehl nach Anspruch 17, **dadurch gekennzeichnet, dass** dieses aus einer Sorte Zahn-Hartmais und insbesondere aus der Sorte Safrane gewonnen wurde.

**19.** Ein Grieß, der aus einer Sorte Mais gewonnen wurde, deren Fruchthülle entfernt wurde, welcher eine durchschnittliche Korngröße von 300 bis 750 μm hat, die durch Laser-Korngrößenbestimmung gemäß dem Prinzip der Lichtbrechung nach dem Schritt (a) des Verfahrens nach einem der Ansprüche 1 bis 16 berechnet wurde, und der den Schritt (b) des Verfahrens nach einem der Ansprüche 1 bis 16 durchlaufen hat, **dadurch gekennzeichnet, dass** er einen pH-Wert von 6 bis 8,5 aufweist und einen Geliergrad von 20 bis 45 Prozent, gemessen gemäß der von Birch & Priestley beschriebenen Methode.

**20.** Ein Grieß nach Anspruch 19, **dadurch gekennzeichnet, dass** dieser aus einer Sorte Zahn-Hartmais und insbesondere aus der Sorte Safrane gewonnen wurde.

**FIG. 1**

Grains de maïs entiers

↓

NIXTAMALISATION

(cuisson - trempage)

↓

LAVAGE pour élimination des enveloppes du grain

↓

BROYAGE

↓

Pâte MASA

Utilisation directe sur ligne

Séchage et obtention de la farine MASA

**FIG. 2**

Variété corné denté

↓

Farines et semoules
de granulométries controlées

↓

Traitement thermique

↓

Mélange

↓

Farine MASA

**FIG. 3**

farine Masa        eau (75 à 90%)

Pétrisage

Feeder

Sheeter
(laminoir - découpeur)

Four

Tapis convoyeur
et
refroidisseur

Friture

Arômatisation
puis conditionnement